# EUROPEAN PATENT APPLICATION

(11) **EP 0 712 711 A2**
(43) Date of publication of application: **22.05.1996**
(21) Application number: 95308063.7
(22) Date of filing: 10.11.1995
(51) Int. Cl.: B29C 47/00, B29C 47/88

(54) **Moulding processes and apparatus**

(30) Priority: 17.11.1994 GB 9423163
(71) Applicant: DRAFTEX INDUSTRIES LIMITED, Edinburgh EH3 6YY, Scotland (GB)
(72) Inventor: Renzo, Bernard, F-44300 Nantes (FR); Robinault, Michel, F-44000 Nantes (FR); Urbain, Didier, F-49500 Saint Gemmes d'Aubigne (FR)
(74) Representative: Foster, David Martyn

(57) **Abstract**

A process and apparatus for producing a pipe from thermoplastic material and having a predetermined non-straight configuration uses an extrusion head (6) which is movable in a predetermined manner with reference to three perpendicular axes to give an appropriate shape to an extruded parison (26). Simultaneously, flows of refrigerant are fed into the interior (28) of the parison (26) through an orifice (10) and around the outside of the parison (26) through further bores (20,22) in a cover plate (18). The refrigerant rapidly cools and solidifies the material of the parison (26), thereby retaining the desired non-straight configuration. The thermoplastic material preferably comprises thermoplastic material having high capability of dissipating heat.

## Description

The invention relates to a process of producing a tubular article made of thermoplastic material and having a predetermined non-straight configuration, comprising the steps of extruding a parison incorporating the said material, and causing it without applied mechanical constraint to be formed into the predetermined configuration as it is extruded.

The invention also relates to apparatus for producing a tubular article made of thermoplastic material and having a predetermined non-straight configuration, comprising an extrusion head for extruding a parison of synthetic thermoplastic resin material, and forming means for forming the extruded parison into the predetermined configuration without applying mechanical constraint to it.

However, the extruded parison produced by such process and apparatus may change shape or configuration after extrusion. The invention aims to solve this problem.

According to the invention, the process as first set forth above is characterised by the step of simultaneously and rapidly lowering the temperature of the parison to solidify the material in the predetermined configuration and thereby to produce the said article.

According to the invention, also, the apparatus as first set forth above is characterised by cooling means for rapidly lowering the temperature of the parison substantially simultaneously with its extrusion so as to solidify the material in the predetermined configuration and thereby to produce the said article.

Moulding processes and apparatus according to the invention will now be described, by way of example only, with reference to the accompanying diagrammatic drawings in which:
Figure 1 is a perspective view of a pipe to be produced by the process and apparatus;
Figure 2 is a cross-section through part of one form of the apparatus, showing a pipe in the course of production;
Figure 3 is a longitudinal cross-section through another pipe which may be produced by the processes and apparatus; and
Figures 4,5 and 6 are cross-sections corresponding generally to Figure 3 but through other forms of pipe which can be produced by the processes and apparatus.

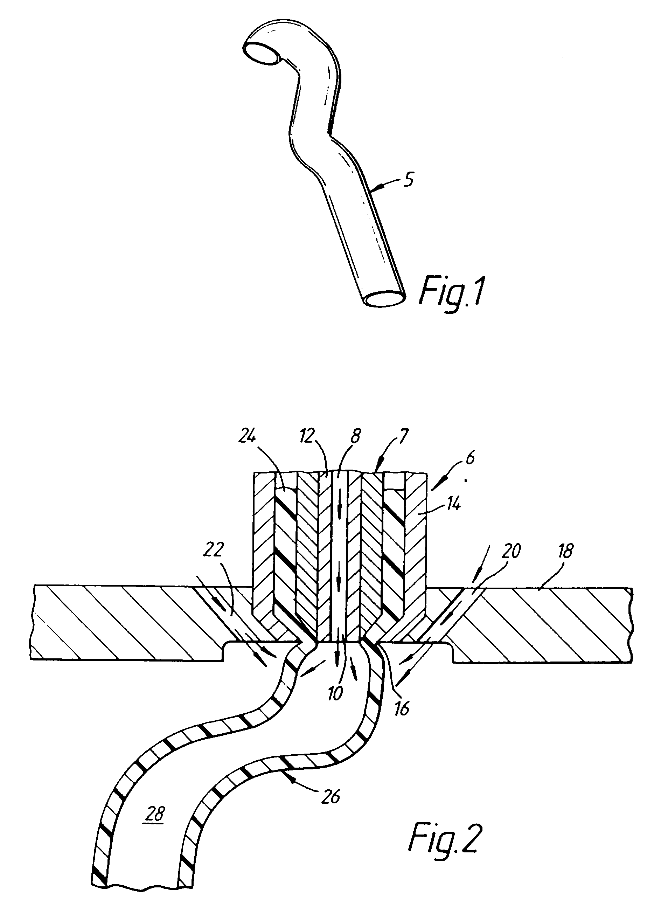

Figure 1 shows a tubular article 5 in the form of a pipe having a predetermined non-straight configuration. The stiffness of the material from which the pipe is made is such that it retains this configuration, though it has a certain amount of flexibility. The pipe may be made, for example, from synthetic thermoplastic resin material, the process and apparatus for making it being described below.

The pipe 5 may be used, for example, in the cooling system for a motor vehicle engine or for the heating and air conditioning system of the passenger compartment of the vehicle. Its configuration is predetermined according to the position in which it is to be fixed in the vehicle.

The processes and apparatus to be described in more detail below are for producing pipes or tubes having non-straight configurations, such as shown by way of example in Figure 1.

Figure 2 shows one form of the apparatus.

As shown, the apparatus comprises an extrusion head 6. The apparatus has a central support 7 having a through bore 8 terminating in an orifice 10. The through bore 8 is defined by a cylindrical thermally insulating wall 12.

A die member 14 surrounds the central support 5 and defines an annular passage 15 terminating in an annular orifice 16 for extrusion of material in a manner to be explained. A cover 18 is rigidly attached to the outside of the die member 14 and is provided with through bores 20,22 for a purpose to be described.

The whole assembly 6, comprising the central support 7, the die member 14 and the cover 18, is controllably displaceable about three axes - that is, the vertical axis and the two perpendicular axes.

In use, synthetic thermoplastic resin material 24 is extruded (by means of an extruder not shown) through the annular passage 15 and thence through the die orifice 16 to form a tubular parison 26. As this extrusion process takes place, the whole assembly 6 is controllably shifted with reference to the three axes so as to cause the parison to become curved, partly by the effect of its own inertia, into the required non-straight configuration.

The complex movement of the assembly 6, with reference to the three axes, is controlled in a predetermined manner so as to give the parison the required non-straight configuration.

Simultaneously with this process, though, a liquid or gaseous refrigerant is fed into the interior 28 of the parison through the bore 8 and orifice 10 of the central support 7. Further liquid or gaseous refrigerant is fed around the outside of the parison 26 through the through bores 20,22 in the cover 18. The two flows of refrigerant, into the interior and around the exterior of the parison 26, can be controlled independently if desired.

The effect of the flows of refrigerant is to cool the extruded synthetic thermoplastic resin material rapidly and to solidify it into the configuration which it has been given by the aforementioned movement of the assembly 6 about the three axes.

Advantageously, this process is assisted by selecting the synthetic thermoplastic resin material to have a high capability of dissipating heat. This helps to ensure that the cooling and solidifying effect takes place as rapidly as possible.

At the completion of the extrusion and cooling and solidification stages, the parison 26 is then cut off from the extrusion head 6 and removed from the apparatus. This process may be carried out by vertically downward movement of the support 7 relative to the die member 14 so as to close the annular orifice 16.

In this way, therefore, tubular parts, such as pipes, can be rapidly produced in predetermined non-straight configurations by an extrusion process. The process does not require the use of complex moulding apparatus incorporating non-straight moulds made, for example, from two separate mould halves which have to be brought together for the moulding operation and then separated for extraction of the moulded part. The process and apparatus described above with reference to Figure 2 is also advantageous over known processes for producing non-straight pipes from rubber in which the initially formed pipes are placed over rods which are bent to hold the rubber in the desired non-straight configuration until vulcanisation is complete. Such processes are unsatisfactory because of the necessary amount of manual operations.

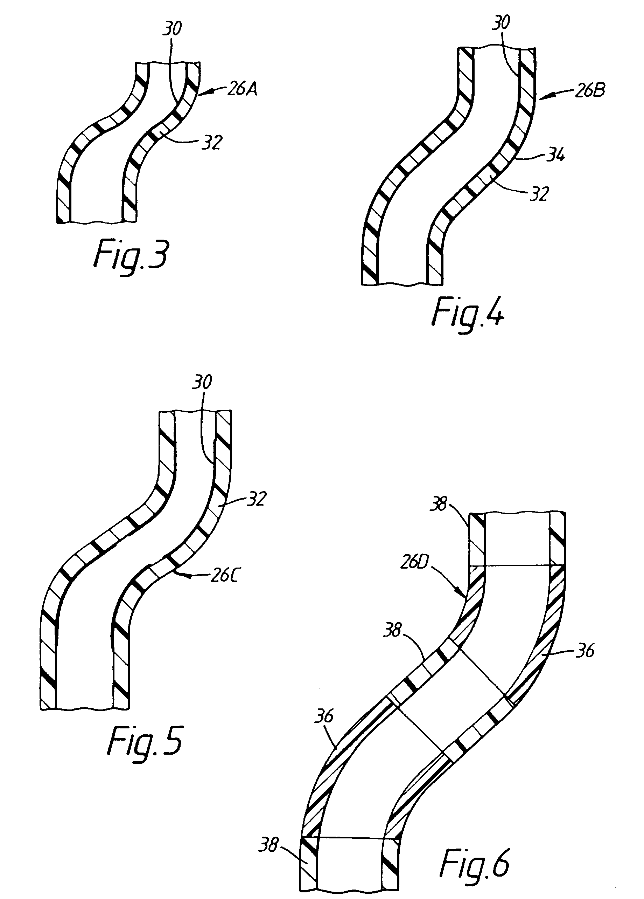

Figures 3,4,5 and 6 show modified forms of non-straight pipes which can be produced by the moulding processes and apparatus described with reference to Figure 2.

Figure 3 shows a longitudinal cross-section through one such variant. In this case, the parison 26A is formed with an internal tubular layer 30 of a synthetic thermoplastic resin material adapted to be cooled and solidified rapidly by the gaseous or liquid refrigerant; thus, the material of the layer 30 advantageously has a high capability of dissipating heat. The layer 30 is relatively thin and is formed on the interior of an outer, thicker, layer 32 of synthetic thermoplastic resin material which need not be especially adapted to cool and solidify rapidly in response to the refrigerant - thus, the material of the layer 32 need not have the high capability of dissipating heat. As before, the parison 26A is extruded from the die orifice 16 (Fig. 2) to have the desired non-straight configuration, this configuration being produced by appropriate displacement of the assembly 6 about the three axes in the manner explained with reference to Figure 2. The injection of the gaseous or liquid refrigerant into the interior of and around the exterior of the parison 26A causes the material of the inner layer 30 to cool rapidly and solidify in the manner explained, so as to ensure that the desired non-straight configuration for the final pipe is retained both by the material of the inner layer 30 and the material of the outer layer 32. In this case, the outer flow of refrigerant is not so significant as the internal flow of refrigerant.

The inner and outer layers 30,32 of the synthetic thermoplastic resin materials may be formed onto each other using a known multi-material extrusion head positioned upstream of the extrusion head 6 of Figure 2.

Figure 4 shows a modification to the parison shown in Figure 3. In Figure 4, the extruded parison 26B has the inner layer 30 and the thicker layer 32 of Figure 3. In addition, however, it has an outer layer 34 which is made of synthetic thermoplastic resin material of the same type as the material of the layer 30; in other words, the layer 34 is advantageously made of synthetic thermoplastic resin material adapted to cool and solidify rapidly and is therefore preferably has a high capability of dissipating heat. As before, the material of the layer 32 does not need to have this characteristic. The parison 26B is extruded in the manner already explained, being advantageously produced by a multi-material extrusion head mounted upstream of the extrusion head 6 of Figure 2.

The parison 26C of Figure 5 is generally similar to that shown in Figure 4. However, in this case the inner layer 30 of Figure 3, preferably made of synthetic thermoplastic resin material having the high capability of dissipating heat, is positioned only in those locations of the parison 26C where curves or bends are to exist in the finished pipe or tube.

Figure 6 shows a further variant. In this case, the parison 26D incorporates synthetic thermoplastic resin material of different types arranged end to end instead of superimposed on each other. Thus, over the portions of the parison (and thus over the corresponding portions of the finished pipe or tube) which are to be curved, the parison is formed of material 36 selected so as to cool and solidify very rapidly in response to the flows of gaseous or fluid refrigerant. Over the regions where the parison 26D, and thus the finished pipe or tube, is to be straight or substantially straight, however, material 38 is used which does not have to have this characteristic (high capability of dissipating heat). Again, the parison 26D can be produced by an appropriate form of extruder mounted upstream of the extrusion head 6 and into which is fed, sequentially, the different types of material 36,38.

## Claims

1. A process of producing a tubular article (5) made of thermoplastic material and having a predetermined non-straight configuration, comprising the steps of extruding a parison (26) incorporating the said material, and causing it without applied mechanical constraint to be formed into the predetermined configuration as it is extruded, characterised by the step of simultaneously and rapidly lowering the temperature of the parison (26) to solidify the material in the predetermined configuration and thereby to produce the said article (5).

2. A process according to claim 1, characterised in that the step of causing the extruded parison (26) to be formed into the predetermined configuration comprises the step of subjecting an extrusion head (6) from which the parison (26) is extruded to predetermined movement about one or more of three perpendicular axes.

3. A process according to claim 1 or 2, characterised in that the step of lowering the temperature of the parison (26) comprises the step of introducing a flow of refrigerant into the interior of the parison (26).

4. A process according to any preceding claim, characterised in that the step of lowering the temperature of the parison (26) comprises the step of applying a flow of refrigerant to the exterior of the parison (26).

5. Apparatus for producing a tubular article (5) made of thermoplastic material and having a predetermined non-straight configuration, comprising an extrusion head (6) for extruding a parison (26) of synthetic thermoplastic resin material, and forming means for forming the extruded parison (26) into the predetermined configuration without applying mechanical constraint to it, characterised by cooling means (8,10,20,22) for rapidly lowering the temperature of the parison (26) substantially simultaneously with its extrusion so as to solidify the material in the predetermined configuration and thereby to produce the said article (5).

6. Apparatus according to claim 5, characterised in that the forming means comprises means for moving the extrusion head (6) in a predetermined manner with respect to three perpendicular axes so as to produce the predetermined configuration for the extruded parison (26).

7. Apparatus according to claim 5 or 6, characterised in that the cooling means comprises means (8,10,20,22) for producing a flow of refrigerant immediately adjacent to the parison (26).

8. Apparatus according to claim 7, characterised in that the cooling means comprises means (8,10) for causing the fluid refrigerant to flow into the interior of the parison (26).

9. Apparatus according to claim 7 or 8, characterised in that the cooling means comprises means (20,22) for causing the flow of refrigerant to flow around the exterior of the parison.

10. Apparatus according to any one of claims 7 to 9, characterised in that the extrusion head (6) comprises an annularly shaped die (14) and means for extruding the said material through the die (14) to form the parison (26), and in that the cooling means comprises a passageway (8) for the refrigerant substantially coaxial with the annularly shaped die (14).

11. Apparatus according to claim 10, characterised in that the cooling means includes an exterior cover (18) mounted around the outside of the die (14) and extending over the extruded parison (26) in use and defining at least one through passage (20,22) for supplying the refrigerant to the exterior of the parison (26).

12. Apparatus according to any one of claims 5 to 10, characterised by cutting means for cutting off the parison (26) from the extrusion head (6).

13. A process or apparatus according to any preceding claim, characterised in that the material of the parison (26) comprises synthetic thermoplastic resin material (e.g. 30,34,36) having a high capability of dissipating heat.

14. A process or apparatus according to claim 13, characterised in that the said material also includes synthetic thermoplastic resin material (e.g. 32,38) of lower capability of dissipating heat.

15. A process or apparatus according to claim 14, characterised in that the two materials (30,32,34) are arranged as superimposed contacting layers over at least part of the length of the parison (26).

16. A process or apparatus according to claim 15, characterised in that the said part of the length of the parison is a part to be curved and in that another part of the parison which is substantially straight is formed only of the said material (32) of lower capability of dissipating heat.

17. A process or apparatus according to claim 15 or 16, characterised in that the material (30) of high capability of dissipating heat is formed as an interior coaxial layer.

18. A process or apparatus according to claim 15, characterised in that the material (30,34) of the high capability of dissipating heat is formed as inner and outer coaxial layers with a layer of the material (32) of lower such capability between them.

19. A process or apparatus according to claim 14, characterised in that the two materials (36,38) are arranged as end-to-end regions of the parison (26).

20. A process or apparatus according to claim 19, characterised in that the or each region of the material of high capability of dissipating heat is positioned where a curve is to exist in the configuration of the article (5).

21. A process or apparatus according to claim 19 or 20, characterised in that the or each region (38) of the material of lower capability of dissipating heat is positioned where the article (5) is to have a substantially straight configuration.

22. A tubular article made of thermoplastic material and having a predetermined non-straight configuration, characterised in that it is made by apparatus according to any one of claims 5 to 21.
